# EUROPEAN PATENT SPECIFICATION

(11) **EP 3 389 989 B1**
(45) Date of publication and mention of the grant of the patent: **26.10.2022**
(21) Application number: 16822600.9
(22) Date of filing: 14.12.2016
(51) Int. Cl.: B29C 63/00, B29C 63/04

(54) **METHOD AND APPARATUS FOR APPLYING A LAYER OF MATERIAL TO A LEADING EDGE OF A WIND TURBINE BLADE**
VERFAHREN UND VORRICHTUNG ZUM AUFBRINGEN EINER MATERIALSCHICHT AUF EINE VORDERKANTE EINER WINDTURBINENSCHAUFEL
PROCÉDÉ ET APPAREIL D'APPLICATION D'UNE COUCHE DE MATÉRIAU À UN BORD D'ATTAQUE D'UNE PALE D'ÉOLIENNE

(30) Priority: 15.12.2015 GB 201522140; 12.08.2016 GB 201613854
(43) Date of publication of application: 24.10.2018
(73) Proprietor: Vestas Wind Systems A/S, 8200 Aarhus N (DK)
(72) Inventor: NIELSEN, Knud Stenbæk, 6900 Skjern (DK); OLESEN, Alex, 6900 Skjern (DK)
(74) Representative: Vestas Patents Department
(86) International application number: PCT/DK2016/050431
(87) International publication number: WO 2017/101947

(56) References cited:
- DE-T2- 68 903 896
- GB-A- 412 300
- US-A1- 2009 295 015

## Description

### Field of the invention

The invention relates to a method and apparatus for applying a layer of material to a leading edge of a wind turbine blade.

### Background to the invention

It is often necessary to apply layers of material such as paint, resin, adhesives, pre-cured polymer tapes, or other pre-shaped layers to the leading edge of a wind turbine blade during its manufacture and during on-site maintenance. For example, an erosion-resistant paint or leading edge protection layer is applied to the leading edge of the blade during manufacture to resist erosion of the leading edge due to precipitation and airborne particles while the blade is in use. During use, the erosion-resistant paint can be gradually eroded and it can therefore be necessary to re-apply the layers to the leading edge of the wind turbine blade on-site.

It is important that such layers are applied uniformly to the surface of the wind turbine blade and that the thickness of the layer is carefully controlled. For example, if paint is not of uniform thickness, some regions will be too thin, and will not provide sufficient erosion resistance. An even layer is particularly important at the leading edge of the blade, because any roughness or inconsistencies at the leading edge will disturb the air flow around the blade and may lead to a reduction in the aerodynamic efficiency of the wind turbine.

Erosion-resistant paint is typically applied by spraying or using a brush or roller. However, it is difficult to apply such layers of material evenly and smoothly to the curved surface at the leading edge of a wind turbine blade. For example, in a typical two-component erosion-resistant paint, the paint is very fluid in its initial state when it has just been mixed, and has a low viscosity. When applied to the curved surface of the leading edge, the low viscosity means that the paint tends to run down the contours of the curves making it difficult to apply evenly. Shortly after the paint has been mixed (in some cases, within a few minutes), the paint begins to gel and the viscosity of the paint increases; however, in this gelled state it is too viscous to be spread evenly and smoothly. Given that the paint has a low gel point (meaning that it gels quickly) there is therefore only a very short window in which the paint is at a viscosity that is suitable for even spreading.

Thus, it is very difficult to achieve a paint viscosity that allows even application of the paint to the leading edge of the wind turbine blade.

Pre-cured polymer tapes are typically attached manually using adhesives applied to a blade-facing surface of the tape. However, applying tapes in this way requires significant skill and diligence. If the tape is not skilfully applied, the tape may be uneven or damaged.

It would be desirable to overcome or mitigate the problems described above. US2009/295015 discloses a technology utilising an apparatus with a flexible reconfigurable substrate.

### Summary of the invention

Against this background, the invention resides in apparatus for applying a layer of material to a leading edge of a wind turbine blade. The apparatus comprises a flexible substrate capable of supporting the layer of material and being reconfigurable between a presentation configuration in which, in use, a layer of material supported by the flexible substrate can be offered up to the leading edge of the wind turbine blade to define an initial area of contact between the layer of material and the leading edge, and a transfer configuration in which the flexible substrate adopts the contours of at least a portion of the leading edge; and a substrate support configured to support the flexible substrate in the presentation and transfer configurations such that the flexible substrate can be reconfigured from the presentation configuration into the transfer configuration by increasing the area of contact between the layer of material and the leading edge upon relative movement of the flexible substrate and the leading edge towards one another. The substrate support comprises a resistive element that is configured to apply a resistive force to push the flexible substrate against the leading edge as the flexible substrate and the leading edge are moved towards one another.

By virtue of the flexible substrate that can be reconfigured between the presentation and transfer configurations using the moveable substrate support, a layer of material of predetermined thickness can be gradually and gently wrapped around the leading edge of the blade as the flexible substrate is reconfigured to adopt the contours of at least a portion of the leading edge. Over the majority of the layer of material, away from edge regions of the layer, this gentle wrapping motion allows the layer of material to be brought into contact with the leading edge substantially without disturbing or displacing the material in the majority of the layer of material, so that the majority of the layer remains at the pre-determined thickness. As the wrapping motion continues to an end region of the layer, a small amount of material in the edge region may be displaced outwards so that the material in the edge region tapers to zero thickness.

By "flexible" is meant that the substrate can be deformed elastically. In particular, the substrate can be deformed elastically between the presentation and transfer configurations; so that the substrate adopts the contours of the leading edge.

The resistive force that pushes the flexible substrate against the leading edge ensures that the layer of material is wrapped tightly around the leading edge to ensure a smooth and even application. The resistive force also facilitates transfer from the flexible substrate to the leading edge providing a fast and effective means of transferring the layer of material, whilst allowing the apparatus to remain simple and inexpensive.

The resulting layer of material that is applied to the leading edge of the blade is therefore of the predetermined thickness throughout the majority of the layer, so that the thickness of the layer can be easily and reliably controlled. There may be a tapering thickness in the edge region of the layer, thereby avoiding any 'step' on the leading edge where the layer of material ends, which improves the aerodynamic performance of the blade.

The resistive element may be arranged in the substrate support such that when the flexible substrate and the leading edge are moved towards one another, the flexible substrate is pushed against the resistive element. This provides a simple means for causing the resistive element to provide resistive force to push the flexible substrate against the leading edge. The flexible substrate may comprise a layer-supporting surface configured to support the layer of material, and the resistive element may be arranged on a side of the flexible substrate that is opposite the layer-supporting surface.

The resistive element may be elastically deformable and/or elastically compressible. Such elastic deformability and/or compressibility provides elastic restoring forces that advantageously act as the resistive forces that push the flexible substrate against the leading edge.

To better accommodate such elastically deformability, the support may define a region of free space into which the resistive element may be deformed upon relative movement of the flexible substrate and the leading edge towards one another.

The support may comprise one or more element supports for supporting the resistive element. In particular, the support may comprise two element supports arranged to support opposite sides of the element. Optionally, a free space may be defined between the element supports. This provides a compact configuration that allows the element supports to support the resistive element whilst providing a free-space into which the resistive element can be deformed.

For particular efficiency of space, the resistive element may comprise a layer of deformable material. For example, the resistive element may comprise a foam material, which is advantageously inexpensive.

The flexible substrate may comprise a flexible membrane. The flexible substrate may have thickness that is less than approximately 2 mm. The flexible substrate may be made of a material selected from the group of: silicon rubber, polyurethane, polyethylene, polypropylene or nylon. By flexible is meant that the substrate can change shape upon relative movement of the flexible substrate and the leading edge towards one another without breaking.

A substrate reinforcement may be disposed between the flexible substrate and the resistive element. Such a substrate reinforcement advantageously acts to spread the resistive force applied by the resistive element to the flexible substrate, so that the resistive force is even. This encourages smooth application of the layer of material and helps to avoid wrinkles in the layer.

The substrate reinforcement may comprise a flexible reinforcement membrane. To spread the resistive force particularly evenly, the substrate reinforcement may be thicker than the flexible substrate.

For particular ease of application of the layer of material to the flexible substrate, the apparatus may comprise an applicator for applying a layer of material to the flexible substrate. For particularly careful control of the thickness of the layer of material, the applicator may comprise a container provided with slot for dispensing the material onto the flexible substrate.

The invention also extends to a method of applying a layer of material to a leading edge of a wind turbine blade, the method comprising: providing a layer of material applied on a flexible substrate; arranging the flexible substrate in relation to the leading edge of the wind turbine blade with the flexible substrate in a presentation configuration such that an initial area of contact is defined between the layer of material and the leading edge; reconfiguring the flexible substrate into a transfer configuration in which the flexible substrate adopts the contours of the leading edge by increasing the area of contact between the layer of material and the leading edge; and transferring the layer of material from the flexible substrate to the leading edge of the wind turbine blade.

For particularly effective transfer, the step of transferring the layer of material may comprise pushing the flexible substrate against the leading edge of the wind turbine blade.

The flexible substrate may be provided on a substrate support, and the substrate support may comprise a resistive element that is configured to apply a resistive force to push the flexible substrate against the leading edge as the flexible substrate and the leading edge are moved towards one another. In this case, the method may comprise moving the flexible substrate and the leading edge towards each other to cause the resistive element to push the flexible substrate against the leading edge.

The method may comprise pushing the flexible substrate against the resistive element with the leading edge.

The method may comprise elastically deforming and/or compressing the resistive element to cause the resistive element to push the flexible substrate against the leading edge. The substrate support may define a region of free space, and the method may comprise deforming the resistive element into the free space.

The step of providing a flexible substrate having a layer of material applied thereon may comprise applying a layer of material to a flexible substrate. Alternatively, a substrate may be supplied with a layer of material pre-applied.

The step of applying a layer of material to the flexible substrate may comprise applying a layer of liquid material to the flexible substrate.

So that the thickness of the layer is not altered due to flow of the liquid layer as it is reconfigured into the transfer configuration, the step of applying a layer of material to the flexible substrate may comprise at least partially pre-curing the layer of liquid material.

The method may comprise pre-shaping the layer of material into a substantially curved shape during the pre-curing process. In this way, the layer is cured so that it has substantially no residual stress when it is arranged in a curved configuration. When the resulting layer is applied to a leading edge of a wind turbine blade, it is forced to adopt a curved configuration, similar to the configuration it adopted as it was cured, and in his configuration it has substantially no residual stress. By contrast, if the layer had been cured in a flat configuration, this curved configuration (when applied to the leading edge) would lead to a difference in the stress state in the upper and lower surfaces of the layer and may lead to a decreased ability to absorb precipitation strikes and hence a decreased erosion-resistance performance. Thus, pre-curing the layer of material into a curved shape improves the erosion performance of the layer.

The method may comprise arranging a part of the flexible substrate that supports the layer of material in a substantially concave curing configuration before or during pre-curing.

The method may comprise curing the layer of liquid material to produce a layer of solid material on the flexible substrate.

The step of applying a layer of material to the flexible substrate may comprise applying a layer of solid material to the flexible substrate. In this case, for particularly effective adhesion to the leading edge, the method may comprise applying an adhesive layer to the layer of solid material before arranging the flexible substrate in the presentation configuration. The adhesive layer may be a layer of liquid adhesive, and the layer of solid material and the layer of liquid adhesive may be layers of substantially the same material in solid and liquid states respectively.

The method may comprise arranging the flexible substrate in a substantially flat application configuration before applying the layer of material to the flexible substrate. Arranging the flexible substrate in a flat configuration to apply the layer of material allows for particularly careful control of the thickness of the layer of material, particularly if the layer is applied to the substrate as a liquid layer.

The step of transferring the layer of material from the flexible substrate to the leading edge of the wind turbine blade may comprise curing the layer of material on the flexible substrate.

The layer of material may be applied to the blade in-situ on a wind turbine. Alternatively, the layer of material may be applied in a manufacturing facility or other suitable site.

### Brief description of the drawings

In order that the present invention may be more readily understood, examples of the invention will now be described with reference to the remaining figures, in which:
Figures 1 and 1b are a perspective views of a wind turbine blade and apparatus for applying a layer of material to a leading edge of a wind turbine blade according to an aspect of the invention;
Figures 2a and 2b are cross-section views of a substrate support forming part of the apparatus of Figure 1b in a presentation configuration and a transfer configuration respectively;
Figure 3 is a schematic view of an applicator forming part of the apparatus of Figure 1;
Figure 4 is a perspective view of a dispensing container forming part of the applicator of Figure 3;

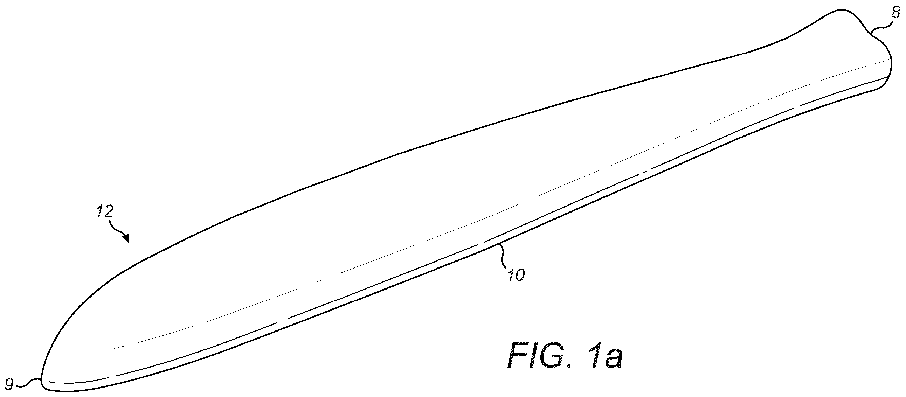

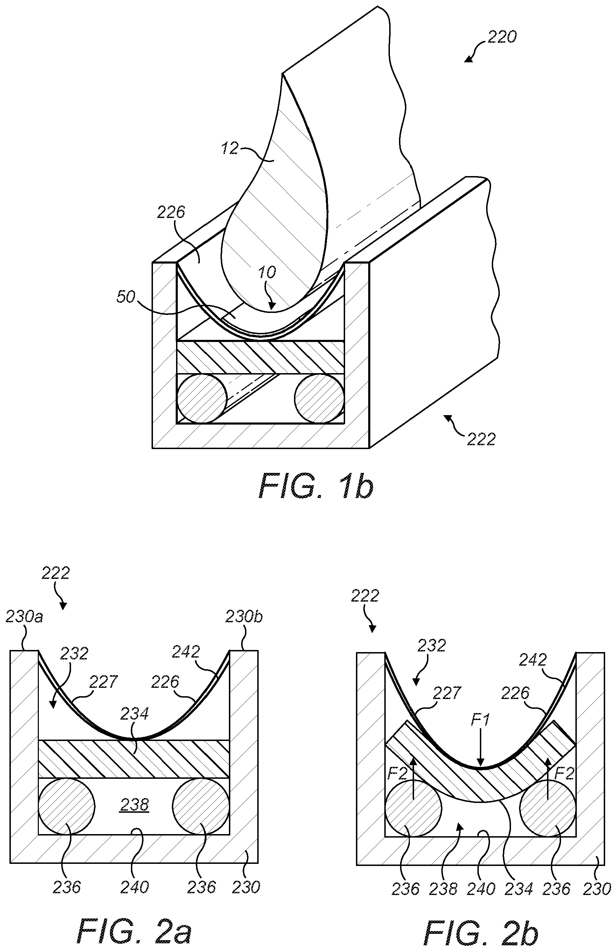

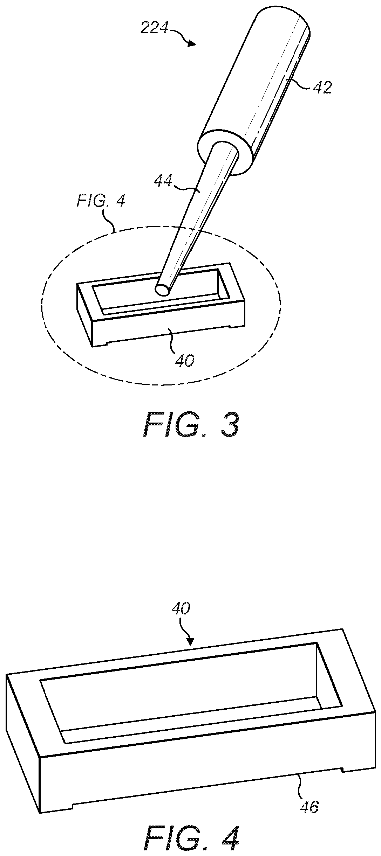

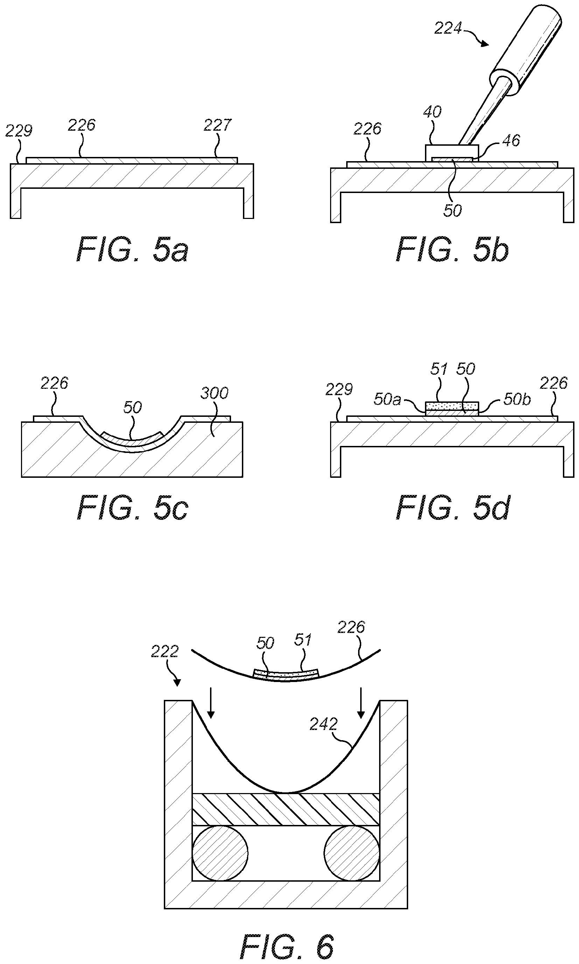

Figures 5a is a cross-section view of a flexible substrate forming a part of the apparatus of Figure 1 in an application configuration ready to receive a layer of material; Figure 5b is a cross-section view of the flexible substrate of Figure 5a with a layer of liquid material being applied using the applicator of Figures 3 and 4; Figure 5c is a cross-section view of the flexible substrate arranged in a concave curing configuration during curing of the liquid; and Figure 5d is a cross-section view of the flexible substrate supporting the cured layer of material with a layer of liquid adhesive applied;
Figure 6 is a cross-section view of the substrate of Figure 5d being arranged on the substrate support of Figures 2a and 2b;
Figure 7 is a cross-section view of the apparatus ready to apply a layer of material to the leading edge of a wind turbine blade;
Figure 8 is a cross-section view of the substrate support with the substrate in a presentation configuration, with the layer of material in contact with the leading edge of the blade;
Figure 9 is a cross-section view of the substrate support with the substrate in a transfer configuration in which the substrate has adopted the contours of the leading edge of the wind turbine blade such that the layer of material is wrapped around the leading edge; and
Figure 10 is a cross-section view of the leading edge of the wind turbine blade after the substrate support has been removed, with the layer of material applied to the leading edge.

It will be appreciated them the elements illustrated in the Figures are not drawn to scale.

### Detailed description of embodiments of the invention

Figure 1a illustrates a wind turbine rotor blade 12 which extends from a root end 8 to a tip end 9. The blade comprises a leading edge 10 to which a layer of material is applied as described further below. Figure 1b shows a section of the blade 12 at its tip end and apparatus 220 for applying a layer of material 50 to a leading edge 10 of a wind turbine blade 12. In the context of this invention, the leading edge 10 is the edge region to which the layer of material will be applied, and includes the actual leading edge as well as the area on the suction surface and the pressure surface which surround the leading edge, to which the layer of material will be applied.

The layer of material may take many different forms. For example, the layer of material may be a paint, or it may be another material such as a resin (for example a polyurethane, epoxy or methacrylate resin) or other coating. The layer may be fully cured or it may be partially cured. In the forgoing exemplary embodiment, the layer of material takes the form a layer of liquid paint.

The apparatus 220 comprises a substrate support 222and a substrate 226 in the form of a flexible membrane.

As will be described in detail, the substrate support 222 and flexible membrane 226 are configured such that, upon movement of the leading edge 10 and the flexible membrane 226 towards one another, the flexible membrane 226 will first adopt a presentation configuration, shown in Figure 2a, in which the layer of material 50 is offered up to the leading edge 10 of the wind turbine blade 12 to define an initial area of contact between the layer of material 50 and the leading edge 10, and upon continued movement of the leading edge 10 and the flexible membrane 226 towards one another, the flexible membrane 226 will then be reconfigured by increasing the area of contact between the layer of material 50 and the leading edge 10 until the flexible membrane 226 is in a transfer configuration, shown in Figure 2b, in which the flexible membrane 226 adopts the contours of at least a portion of the leading edge 10, and in which the substrate support 222 applies a resistive force to push the flexible membrane 226, and hence the layer of material 50, against the leading edge 10.

Turning to Figure 2a, which shows the substrate support 222 and membrane 226 in more detail, the substrate support 222 comprises a support frame 230 that defines an internal volume 232. The flexible membrane 226 is positioned in the frame 230 so that it is supported inside the internal volume 232 in a 'U'-shape. In this example the flexible membrane 226 is positioned in the frame 230 but it is not fixed or secured to the frame. The flexible membrane 226 may hang over (not shown) the edges 230a, 230b of the frame so that the U-shape is formed. In this way, the flexible membrane 226 is able to move over the edges of the frame 230 as the membrane is manipulated.

A substrate reinforcement in the form of a flexible reinforcing membrane 242 is positioned beneath the flexible membrane 226. In this example, the flexible reinforcing membrane 242 is positioned in the frame 230 but it is not fixed or secured to the frame. The flexible reinforcing membrane 242 may hang over (not shown) the edges 230a, 230b of the frame in the same manner as the flexible membrane 226 that defines the substrate support, so that the flexible reinforcing membrane 242 also defines a U-shape.

Beneath the membranes 226, 242, the internal volume 232 also houses a resistive element 234 in the form of an elastically deformable member, which is configured to apply a resistive force that, in use, pushes the membrane 226 against the leading edge of the blade.

A region of free space 238 is defined by the substrate support 222 beneath the resistive element 234. In the embodiment shown, the free space 238 is created by means of element supports 236 that support the resistive element 234 at its left and right sides. The elements supports 236 are support blocks that extend along the length of the support frame 230 in a direction parallel to the leading edge 10. The element supports 236 hold the resistive element above a base 240 of the substrate support 222 to define the free space 238 below the resistive element 234 and between the element supports 236.

Considering the flexible membrane 226 in more detail, the flexible membrane 226 is made of a soft, flexible material, such as a silicon rubber. Alternatively, the membrane 226 may be made from another suitable plastics material such as polyurethane, polyethylene, polypropylene or nylon. The membrane has a thickness of less than 2mm, and preferably less than 1mm. In this way, the membrane is flexible so as to allow easy reconfiguration of the membrane.

An upper surface 227 of the flexible membrane 226 defines a layer-supporting surface that supports the layer of material 50 when the apparatus is in use. The layer-supporting 227 of the flexible membrane 226 is smooth so as to provide a smooth finish to the layer of material after application to the leading edge, and so as to facilitate transfer from the flexible membrane 226 to the leading edge.

The reinforcement membrane 242 is provided in the form of a further flexible membrane and may be made of a soft, flexible material, such as a silicon rubber or a suitable plastics material such as polyurethane, polyethylene, polypropylene or nylon. The reinforcement membrane 242 is thicker than the flexible membrane 226 that defines the substrate: for example, the reinforcement membrane 242 may be twice as thick as the flexible membrane 226 that defines the substrate.

Considering now the resistive element 234 in more detail, the resistive element 234 is located in the internal volume 232 of the support frame 23 and is arranged on the side of the flexible membrane 226 that is opposite to the layer-supporting surface 227. In the orientation shown in Figure 2a the resistive element 234 is therefore arranged beneath the flexible membrane 226.

The resistive element 234 is elastically deformable. In the context of this invention "elastically deformable" means that the shape of the resistive element 234 can be changed upon application of a force and/or that the resistive element 234 can be compressed upon application of a force.

To this end, the resistive element 234 is made of an elastically deformable material. For example, the resistive element 234 may be made of a rubber foam such as a polyether foam, or any other suitable deformable material. In the embodiment illustrated, the resistive element 234 takes the form of a layer of rubber foam material, though any suitable configuration of material may be used.

Referring now to Figure 2b, if a downward force *F1* is applied generally at the centre of the resistive element 234, the resistive element 234 will be subjected to a three-point bend, with the downward force *F1* applied at the centre and opposing upward forces *F2* applied by the element supports 236 at the left and right sides of the resistive element 234. This three-point bend causes the resistive element 234 to be elastically deformed into the free space 238 to define a 'U'-shape and to be elastically compressed.

The arrangement of the substrate support 222 and flexible membrane 226 allows the flexible membrane 226 to be moved between the presentation and transfer configurations in response to a force being exerted on the membrane 226 by the leading edge of a wind turbine blade. The presence of the free space 238 allows for particularly easy deformation of the resistive element 234 and hence allows for particularly easy reconfiguration of the flexible membrane 226.

In particular, Figure 2a illustrates the substrate support 222 and the membrane 226 when substantially no force is applied to the membrane 226. In this state, the membrane 226 is in a generally slack or upwards configuration that corresponds to the presentation configuration. Figure 2b illustrates the substrate support 222 the membrane 226 has been deformed downwards by the downward force *F1,* with the membrane 226 in a downwards configuration that corresponds to a transfer configuration. In this configuration the resistive element 234 has been elastically deformed into a 'U' shape such that it extends into the free space 238.

Thus, a downward force exerted on the flexible membrane 226 causes the flexible membrane 226 to adopt the transfer configuration of Figure 2b, and causes the resistive element 234 to be elastically deformed.

The apparatus 220 also comprises an applicator 224. Figures 3 and 4 illustrate the applicator 224 for applying a layer of material 50 to the flexible membrane 226.

Referring to Figure 3, the applicator 224 comprises a dispensing container 40 for holding the material to be applied, a storage volume 42 for storing the material and a transmission means 44 for transmitting the material from the storage volume 42 to the dispensing container 40.

As seen in Figure 4, the dispensing container 40 is formed as a frame, with four side walls and no top or bottom surface. A front wall of the dispensing container comprises a slot 46. In use, material is dispensed through the slot 46 onto the flexible membrane 226 (not visible in Figure 4).

In the embodiment shown, the storage volume 42 is a substantially cylindrical tube that is sealed at both ends, and the transmission means 44 is a length of flexible pipe that joins the storage volume 42 to the dispensing container 40.

The use of the apparatus 220 in applying the layer of material 50 to the leading edge 10 of the wind turbine blade 12 will now be described with reference to Figures 5a to 5d and 6 to 10.

In a first application stage, the layer of material 50 that is to be applied to the leading edge of the wind turbine blade is applied to the flexible membrane 226. This application process may take place on site shortly before the layer of material is applied to the leading edge, or the application process may take place offsite at a separate facility, such that the flexible membrane 226 is provided to the site with the layer of material pre-applied.

The layer of material 50 may take many different forms. For example, the layer of material 50 may be a liquid layer, which may or may not be permitted to partially pre-cure before being applied to the leading edge 10. Alternatively, the layer of material 50 may be a solid layer on to which a layer of liquid adhesive is applied. The layer of material 50 may be a paint, or it may be another material such as a resin or liquid adhesive (for example a polyurethane, epoxy, methacrylate) or a pressure sensitive adhesive (PSA), hot melt adhesive or other coating. The layer may be fully cured or it may be partially cured.

In the forgoing exemplary embodiment, the layer of material 50 that is applied to the leading edge of the blade takes the form of a solid film of paint to which a layer of liquid paint is applied, such that the layer of liquid paint serves as an adhesive that adheres the solid layer to the leading edge.

The process of applying the layer of paint to the flexible membrane 226 will now be described with reference to Figures 5a to 5d.

The flexible membrane 226 is first arranged in an application configuration. As shown in Figure 5a, in the application configuration a least a portion of the membrane 226 lies in a generally flat configuration. This may be achieved by resting the membrane 226 against a flat support surface 229 of a table.

Next, a layer of liquid paint 50 having a predetermined thickness is applied to the flat portion of the flexible membrane 226 using the applicator 224 as shown in Figure 5b. The liquid paint is passed from the storage volume 42 to the dispensing container 40 via the transmission means 44. Once in the dispensing container 40, liquid paint is dispensed onto the flexible membrane 226 from the slot 46. The applicator 24 is dragged along the length of the flexible membrane to apply the layer of paint along the entire length or just part of the length of the flexible membrane 226.

The resulting layer of paint 50 is of a uniform and predetermined thickness that is controlled by the size and shape of the slot 46. The layer of paint may be of any suitable predetermined thickness, and is typically between 0.5 mm and 1 mm thick, though layers are also envisaged that are 5 mm or more in thickness. If the desired width of the paint is greater than that of the width of the slot 46, the applicator can be used to apply multiple layers of material in parallel on the substrate.

After application, the liquid paint 50 is allowed to gel or partially cure. In particular the liquid paint is allowed to gel until it has a sufficiently high viscosity such that it will not flow under the action of gravity. This may take less than 5 minutes, and may, for example require a period of 1 minute. At this stage, the membrane 226 can be moved without disturbing the layer of liquid material.

Once the layer of liquid paint has gelled sufficiently, the membrane 226 is reconfigured into a curing configuration, shown in Figure 5c. In the curing configuration, the part of the membrane 226 that supports the layer of liquid paint 50 is arranged in curved configuration, which in this example is a substantially concave configuration. This may be achieved, for example, by arranging the membrane 226 on a tool 300 having a surface that defines a concave portion, for example in the form of a gutter. More specifically, the tool has a curved portion defining the gutter-shaped formation having a concave surface that is curved about a longitudinal axis.

After the membrane 226 has been reconfigured into the curing configuration the liquid paint is allowed to cure to form a film of solid paint 50. By curing the paint in the concave curing configuration, the paint is pre-cured into its solid form with a concave shape. To effect curing, it may be sufficient to allow the paint to rest for a period of time under atmospheric conditions. For example, the paint may be allowed to cure under atmospheric conditions for a period of 5 minutes to several hours. Alternatively, the layer may be heated to an elevated temperature to expedite the curing process. For example, the layer may be heated to temperatures between 30 °C and 100 °C, or even higher if required, and may be held at that temperature for a time period of 5 minutes to several hours. To this end, a heating means (not shown) may be incorporated into the tool 300 to heat the flexible membrane 226.

When the film of paint is eventually applied to the convex surface of the leading edge 10, the film will be forced to adopt a concave shape. If a flat film of solid paint is forced to adopt a concave configuration a strain is induced in the film. The outer surface of the film of solid paint 50 that faces away from the blade will have a higher stress than the inner surface of the film that faces the blade. This is because the radius of curvature of the outer surface of the film 50 is larger than the radius of curvature of the inner surface of the film. This introduces a pre-stress in the film of solid paint and hence a strain exists in the film when it is on the leading edge of the wind turbine blade. If the film is under sufficient strain then this may decrease the erosion performance of the film, because the film will not absorb precipitation impact as effectively as a film which is not under strain.

By first curing the paint into a slightly concave shape rather than allowing the paint to cure while laid flat, the cured paint is closer to the concave shape that it will eventually adopt when applied to the convex surface of the leading edge and hence the stress that the layer of paint 50 will be subjected to when it is applied to the convex surface is reduced and the strain in the layer on the leading edge will be less. Pre-curing the paint into a concave shape therefore reduces strain in the layer and avoids the degradation of the erosion performance.

However, it may not be essential to cure the paint in the concave shape. In particular, if the film of solid paint 50 is thin then the strain introduced when applying to the leading edge may be low so that the erosion performance of the film is not affected.

As shown in Figure 5d, once the layer of paint 50 has been cured, a layer of adhesive 51 is applied to the surface of the solid film 50. In this example, the solid film is laid 50 flat for the adhesive 51 to be applied. In this example, the adhesive is a layer of liquid paint 51. Transferring the film 50 from a concave shape to a flat shape will not damage the film as the deformation is elastic. The layer of liquid paint may be applied using the applicator 224 or it may be applied using other means. In the example shown, the layer of liquid paint 51 is the same material as the liquid paint that was used to form the solid layer 50. It is dispensed so as to have a thickness that is sufficient to allow the solid film of paint 50 to bond effectively to the blade. The film 50 has two longitudinal edges 50a and 50b as shown.

As shown in Figure 6, once the layer of liquid paint 51 (or other suitable adhesive) has been applied to the flexible membrane 226, the membrane is transferred to the substrate support 222 and arranged in place above the reinforcement membrane 242.

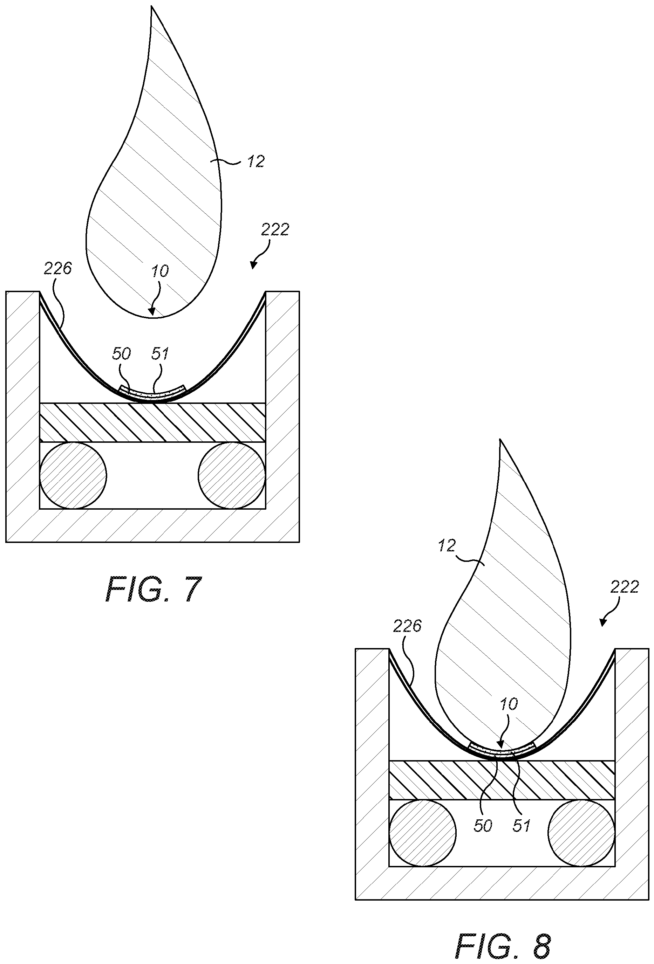

With the flexible membrane 226 in place as shown in Figure 7, the membrane 226 is now ready to be applied to the leading edge 10 of a blade 12.

To apply the layer of material 50 to the leading edge 10, the membrane 226 is first arranged below the blade 12. The layer of material 50 is then offered up to the leading edge 10 of the wind turbine blade 12.

To offer up the layer of material 50 to the leading edge 10, the leading edge 10 and the membrane 226 are moved relatively towards one another. In this example, the substrate support 222, and hence the membrane 226, are moved upwardly toward the blade. This may be achieved by means of an actuator (not shown), which may be controlled by a control system. Alternatively, the blade 12 can be moved towards the substrate support 222 to effect the relative movement. The relative movement continues until the layer of material 50 comes into contact with the leading edge 10 of the blade 12 as shown in Figure 8, at which point the membrane is in the presentation configuration.

Initial contact occurs between the convex tip of the leading edge 10 and the layer of material 50 at a lowermost point of the concave membrane 226. In this way, the initial area of contact between the layer of material 50 and adhesive and the leading edge 10 is relatively small, in this case being defined by a line of contact that runs along the line of the leading edge 10. The flexibility of the membrane 226 means that the layer of material 50 and the leading edge 10 can be brought into contact with one another very gently. This very gentle initial contact over a relatively small initial area means that the solid film is not disturbed as contact is made, which avoids displacement or wrinkling of the film. The gentle contact also ensures that there is very little displacement of the liquid adhesive layer 51 as contact is made, so that the adhesive layer remains at, or close to, a constant predetermined thickness in the central part of the layer, and the solid layer is applied evenly to the leading edge.

After initial contact has been made, relative movement continues and the leading edge 10 of the blade 12 is pushed gradually further against the flexible membrane 226.

As the leading edge 10 is pushed further against the flexible membrane 226, the membrane 226 gradually wraps around the leading edge 10 so that the area of contact between the layer of material 50 and the leading edge 10 gradually increases, with the area of contact growing outwardly towards edges of the flexible membrane 226. The flexible membrane 226 therefore gradually wraps around the leading edge 10, adopting the contours of the leading edge 10 as it does so until the curvature of the membrane 226 matches the curvature of the leading edge 10.

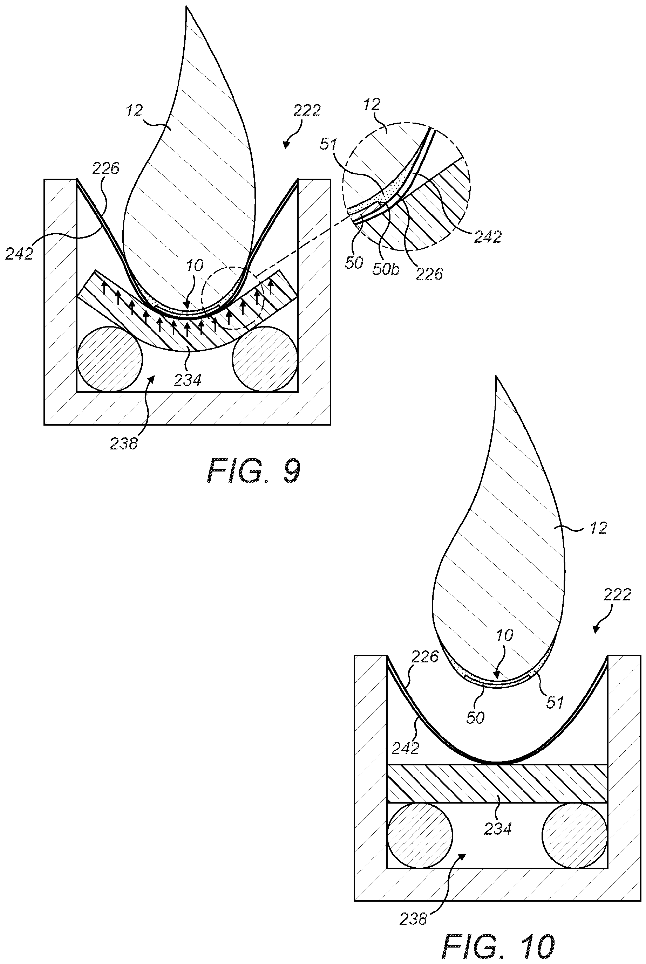

Once the flexible membrane 226 has been sufficiently wrapped around the leading edge 10, the entirety of the layer of material 50 is in contact with the leading edge 10 and has adopted the contours of the leading edge 10. The flexible membrane 226 is then in the transfer configuration, which is shown in Figure 9.

Gradually increasing the area of contact so as to grow the area towards the edges of the membrane 226 means that the contact can remain consistently gentle. This gentle contact guards against disturbance of the solid layer to avoid displacement, breakage and wrinkling of the layer. The gentle contact also guards against displacement of the liquid adhesive layer 51 as the area of contact increases to ensure an even adhesive layer and hence even application of the solid layer of material.

Growing the area of contact outwardly also tends to cause air to be effectively expelled towards the edges of the membrane as the area of contact grows, which guards against air becoming trapped between the layer of material 50 and the leading edge 10 of the wind turbine blade 12.

Thus, the flexible membrane 226 and hence the layer of material 50 are wrapped around the leading edge 10 of the wind turbine blade 12, so that the layer of material 50 is forced to adopt the contours of the leading edge 10 of the wind turbine blade 12.

As the area of contact reaches edges 50a, 50b of the layer of material 50, some of the liquid adhesive material 51 that sits between the solid layer 50 and the leading edge 10 in the edge region is displaced slightly outwardly (i.e. toward the trailing edge of the blade), beyond the edge of the solid layer. The flexible membrane 226 tends to smooth this adhesive out as it is wrapped around the leading edge 10 to give a layer thickness that tapers to zero in the edge region, as can be seen in the partial close-up inset into Figure 9. This smoothing action is particularly encouraged by the reinforcement membrane 242, which provides additional force to encourage displacement of the liquid adhesive 51.

In this way, the wrapping motion provides a layer that is of substantially uniform thickness throughout the bulk of the layer, but provides a small edge region in which the thickness of the layer tapers to zero. As a result, there is no step at the edges 50a, 50b of the paint layer 50, unlike in conventional painting in which there is a step at the edge of the paint, and no need to finish the application by hand to remove any excess materials.

The absence of the step at the edge of the paint layer gives the blade an improved aerodynamic performance during use.

In addition to providing this automatic reconfiguration of the membrane 226 into the transfer configuration, the substrate support 222 and membrane 226 are also configured such that the resistive element 234 causes the membrane 226 to exert a force on the leading edge 10 as the membrane 226 and leading edge 10 are displaced towards one another.

As the leading edge 10 and the flexible membrane 226 are moved towards one another, the leading edge 10 pushes the flexible membrane 226 into the resistive element 234, with the reinforcement membrane 242 sandwiched between the flexible membrane 226 and the resistive element, so as to exert a downward force at the centre of the resistive element 234.

This downward force causes the three-point bend described above that elastically deforms the resistive element 234 into the free space 238, causing the resistive element 234 to adopt a 'U' shape, and to be elastically compressed.

As a result of the elastic deformation of the resistive element 234, elastic restoring forces tend to counter the deformation and exert a resistive force upwards towards the leading edge 10 as indicated by the arrows in Figure 9. In this way, the resistive element 234 pushes the flexible membrane 226, and hence the layer of material 50 against the leading edge 10.

In this transfer configuration, upward forces are exerted on the leading edge 10. The elastic restoring forces caused by deformation of the resistive element 234 tend to push the membrane 226 upwards as has been described. This force causes the membrane 226 to push the layer of material 50 gently onto the leading edge 10. This pushing action ensures that the layer of material is wrapped closely around the leading edge 10 so as to conform exactly to the contours of the leading edge, and also facilitates transfer from the membrane 226 to the leading edge 10.

The reinforcement membrane 242 acts to spread the upward force exerted by the resistive element 234 evenly across the flexible membrane 226. The reinforcement membrane 242 thereby counters any unevenness in the foam layer of the resistive element 234 to ensure an even distribution of force across the flexible membrane 226, and hence across the layer of material 50. In other words, the reinforcement membrane 242 prevents any imperfections (such as wrinkles) in the foam layer 234 from being transferred to the flexible membrane 226, and hence across the layer of material 50.

Once the flexible membrane 226 has been arranged in the transfer configuration, the layer of material 50 is transferred to the leading edge 10 of the wind turbine blade 12.

As noted above, in this example the flexible membrane 226 and the reinforcement membrane 242 are not secured to the frame 230. This means that these membranes do not experience any strain (in the form of stretching) when the leading edge 10 is pushed into the membranes. Avoiding stretching in this way helps to avoid wrinkles in the layer of material and hence to maintain the smoothness of the layer 50.

Because the surface of the flexible membrane 226 is a non-stick surface, the layer of material 50 tends to bond more strongly to the surface of the leading edge 10 of the blade 12, and is thereby transferred from the flexible membrane 226 to the leading edge 10. A release coating may be used to further facilitate transfer from the membrane 226 to the leading edge 10. The smoothness of the membrane 226 also provides for a particularly smooth finish on the external surface of the layer of material 50 that is applied to the leading edge 10, which improves the aerodynamic performance of the blade 12.

At this stage, the layer of adhesive 51 is allowed to cure. This may involve simply waiting for a period of time for the adhesive to cure at room temperature. It may also involve heating the layer of adhesive to facilitate curing. To this end, a heating means (not shown) may be incorporated into the substrate support to heat the flexible membrane 226.

Once a sufficient time period has elapsed the flexible membrane 226 is moved gently away from the leading edge 10 of the blade 12. As the flexible membrane 226 is moved away, the layer of material 50 remains in contact with the leading edge 10, as shown in Figure 10. The layer of material 50 and adhesive 51 is of substantially uniform and pre-determined thickness, except at the edge regions in which the thickness tapers to zero. The layer of material 50 also has substantially no voids between the material 50 and the leading edge 10, and is effectively bonded to the leading edge 10 of the wind turbine blade 12.

The apparatus can then be used to apply further layers of material to the leading edge of the same blade or to the leading edge of different blades.

A single piece of apparatus may be use to apply the layer of material 50 to the entire leading edge if desired. Alternatively, a single piece of apparatus 220 may be used to apply the layer of material to only a part of the leading edge 10, and multiple sets of apparatus may be required to apply the layer of material to the entire leading edge 10.

In the embodiment described, the layer of material is a layer of solid paint and comprises a layer of adhesive applied to its upper surface. However, the material need not be paint; for example, the material may be an adhesive or resin, or a plastic film. Embodiments are also envisaged in which a layer of a liquid material is applied directly to the leading edge.

For example, a layer of liquid material may be applied to the membrane 226 using the applicator tool 224, to provide a liquid layer of a predetermined thickness. With the layer in a liquid state, the layer of liquid material may then be offered up to the leading edge 10 in the same way as described above, with the membrane 226 being arranged in the presentation configuration. The membrane 226 and hence the layer of liquid material may then be wrapped around the leading edge as described above, by moving the membrane 226 into the transfer configuration. The layer of liquid material may then be transferred to the leading edge 10, for example by curing the layer of liquid material to the leading edge 10.

In embodiments where the layer of material 50 is a liquid layer, the gentle initial contact between the layer of material 50 and the leading edge 10 when the membrane 226 is in the presentation configuration ensures that there is very little displacement of the liquid paint within the layer of material 50 as contact is made. Thus, the layer of material 50 remains at, or close to, the predetermined thickness. The continued gentle contact as the membrane 226 is reconfigured into the transfer configuration guards against displacement of the liquid paint within the layer of material 50 as the area of contact increases, thereby ensuring that the pre-determined thickness of the layer is maintained. Growing the area of contact outwardly also tends to cause air to be effectively expelled towards the edges of the membrane as the area of contact grows, which guards against voids forming between the layer of material 50 and the leading edge 10.

Embodiments are also envisaged in which the liquid layer is only partially cured before it is applied to the leading edge. If the liquid layer is partially pre-cured contact can be controlled such that it occurs only when the viscosity has increased to a level that is high enough to decrease the chance of thinning as the liquid paint is applied, but low enough to give good adhesion. This further facilitates the ability to keep the layer of material 50 at, or close to, a predetermined thickness.

In the embodiment described above in Figure 5c, the flexible membrane is arranged in a concave curing configuration during curing. However, this need not be the case, and the flexible membrane may be arranged in other suitable configurations, such as a flat configuration, during curing.

To move the layer 50 between the different configurations shown in Figure 5a to 5d, the table and the tool 300 may be in the form of vacuum tables that suck the flexible substrate 226 onto their surfaces, and retain the flexible substrate 226 firmly in position.

Although in the embodiments described the flexible membrane 226 and reinforcement membrane 242 are positioned in the support frame such that the membranes 226, 242 adopt a concave configuration when in the presentation configuration, this need not be the case. For example, embodiments are envisaged in which the flexible membrane 226 and/or reinforcement membrane 242 are laid flat on the resistive element 234. In this case the flexible membrane 226 may be in a flat configuration when it is presented to the leading edge 10, such that the presentation configuration is a substantially flat configuration. In another example, the resistive element 234 may have a concave shape such that the flexible membrane 226 carrying the curved film 50 can lie in a concave shape for presentation to the leading edge.

The reinforcement membrane 242 is an optional feature and may be omitted from the substrate support 222. For example, the upward force exerted by the resistive element 234 and the flexible membrane 226 alone may be sufficiently high and sufficiently even that the reinforcement membrane 242 is not required.

The resistive element 234 need not take the form of a layer of material but may take any suitable form. For example, the resistive element may comprise multiple layers of material, or may comprise a block of material. Embodiments are also envisaged in which the element supports 236 are omitted and there is no free space provided beneath the resistive element 234, but in which the resistive element is sufficiently large and sufficiently easily deformable that it can deform to accommodate the leading edge of the blade without the need for free space.

Although in the embodiment described the layer of liquid material is applied using an applicator of the sort shown in Figures 3 and 4, the layer of liquid material could be applied by other means, for example by pouring the liquid material onto the surface or using a device such as a brush or spatula.

The flexible membrane 226 and the reinforcement membrane 242 could in an example be secured to the frame 230. In this case, when the leading edge 10 is pushed onto the flexible membrane 226, the flexible membrane will experience some strain as it is stretched and becomes taut. However, as the geometry of the leading edge 10 changes along the length of the wind turbine blade a taut membrane may introduce wrinkles into the film 50. Therefore, it is preferred for the membranes to be unsecured to the frame 230.

Although the invention is particularly effective in applying uniform layers of material to a leading edge of a wind turbine blade, it is also envisaged that the invention may be used to apply layers of non-uniform thickness. For example, the slot in the dispensing container may be shaped to as to provide a layer of varying thickness.

Referring to Figure 5c, the layer of material is cured in a concave shape in a gutter shape. Embodiments are also envisaged in which the flexible membrane 226 is arranged in a convex configuration during curing of the layer, such that, during curing, the surface of the layer 50 supported by the membrane would be concave, and the surface of the layer facing outwardly, away from the membrane would be convex. In these embodiments, the layer of material 50 would be removed from the membrane after curing, inverted, and re-applied to the same, or a different, membrane in its inverted form, with the surface that had been concave during curing facing outwardly, away from the membrane, for presentation to the leading edge. In this way, although the layer would be cured in a convex shape, the layer would be applied to the leading edge such that the surface that had been concave during the curing process would lie against the leading edge of the wind turbine blade, thereby resulting in substantially no stress in the layer of material when applied to the leading edge.

In the embodiment described, the membrane 226 is uniform across its entire surface, however, this need not be the case. For example, the membrane may be provided with ridge formations to hold the liquid material in a particular place during curing.

Embodiments are also envisaged in which a layer of a solid material is applied to the leading edge. For example, a solid film of a material 50 may be applied to the membrane 226 simply by placing it on the membrane 226 in a desired location. A layer of adhesive may then be applied to the surface of the solid film 50, using the applicator described, or by other means. For example, the layer of adhesive may be a solid layer of pressure sensitive adhesive. The layer of material which comprises the solid film 50 and adhesive may then be offered up to the leading edge 10 in the same way as described above, with the membrane 226 being arranged in the presentation configuration. The membrane 226 and hence the solid film 50 and adhesive layer may then be wrapped around the leading edge as described above. Using the apparatus to apply a solid film to the leading edge prevents voids forming between the film and the leading edge as air is expelled outwards toward the edges of the film.

The method and apparatus described can be used to apply a layer of material to the leading edge of the wind turbine blade during manufacture of the blade, or they can be used to apply a layer of material to the leading edge of the wind turbine blade in-situ when it is installed on wind turbine or on the ground. Although in the example described above the apparatus is used in a horizontal orientation, the apparatus may be used in any suitable orientation to apply the layer to the leading edge: for, example, the apparatus may be used in a vertical orientation, particularly if used to apply a layer of material to a leading edge while the blade is in-situ.

The present invention is therefore not limited to the exemplary embodiments described above and many other variations or modifications will be apparent to the skilled person without departing from the scope of the present invention as defined in the following claims.

## Claims

1. Apparatus (220) for applying a layer of material (50) to a leading edge (10) of a wind turbine blade (12), the apparatus comprising:
a flexible substrate (226) capable of supporting the layer of material (50) and being reconfigurable between a presentation configuration in which, in use, a layer of material supported by the flexible substrate can be offered up to the leading edge (10) of the wind turbine blade (12) to define an initial area of contact between the layer of material and the leading edge, and a transfer configuration in which the flexible substrate adopts the contours of at least a portion of the leading edge; and
a substrate support (222) configured to support the flexible substrate (226) in the presentation and transfer configurations such that the flexible substrate can be reconfigured from the presentation configuration into the transfer configuration by increasing the area of contact between the layer of material (50) and the leading edge (10) upon relative movement of the flexible substrate and the leading edge (12) towards one another; and
wherein the substrate support (222) comprises a resistive element (234) that is configured to apply a resistive force to push the flexible substrate (226) against the leading edge (10) as the flexible substrate and the leading edge are moved towards one another.

2. The apparatus of Claim 1, wherein the resistive element (234) is arranged in the substrate support (222) such that when the flexible substrate (226) and the leading edge (10) are moved towards one another, the flexible substrate is pushed against the resistive element.

3. The apparatus of any preceding claim, wherein at least a part of the resistive element (234) is elastically deformable and/or is elastically compressible.

4. The apparatus of Claim 3, wherein the substrate support (222) defines a region of free space (238) into which the resistive element (234) is deformed upon relative movement of the flexible substrate (226) and the leading edge (10) towards one another.

5. The apparatus of any preceding claim, wherein the resistive element (234) comprises a layer of deformable material.

6. The apparatus of any preceding claim, wherein the resistive element (234) comprises a foam material.

7. The apparatus of any preceding claim, further comprising a substrate reinforcement (242) disposed between the flexible substrate (226) and the resistive element (234).

8. A method of applying a layer of material (50) to a leading edge (10) of a wind turbine blade (12), the method comprising:
providing a layer of material (50) on a flexible substrate (226),
arranging the flexible substrate (226) in relation to the leading edge (10) of the wind turbine blade (12) with the flexible substrate in a presentation configuration such that an initial area of contact is defined between the layer of material and the leading edge;
reconfiguring the flexible substrate (226) into a transfer configuration in which the flexible substrate adopts to the contours of the leading edge (10) by increasing the area of contact between the layer of material (50) and the leading edge; and
transferring the layer of material (50) from the flexible substrate (226) to the leading edge (10) of the wind turbine blade (12);
wherein the step of transferring the layer of material (50) comprises pushing the flexible substrate (226) against the leading edge (10) of the wind turbine blade (12).

9. The method of Claim 8 wherein the flexible substrate (226) is provided on a substrate support (222), the substrate support comprising a resistive element (234) that is configured to apply a resistive force to push the flexible substrate against the leading edge (10) as the flexible substrate and the leading edge are moved towards one another, and wherein the method comprises moving the flexible substrate and the leading edge towards each other to cause the resistive element to push the flexible substrate against the leading edge.

10. The method of Claim 9, comprising pushing the flexible substrate (226) against the resistive element (234) with the leading edge (10).

11. The method of Claim 10, comprising elastically deforming the resistive element (234) to cause the resistive element to push the flexible substrate (226) against the leading edge (10).

12. The method of any of Claims 8 to 11, wherein the step of providing a flexible substrate (226) having a layer of material (50) applied thereon comprises applying a layer of material to a flexible substrate.

13. The method of Claim 12, wherein the step of applying a layer of material (50) to the flexible substrate (226) comprises applying a layer of liquid material to the flexible substrate.

14. The method of any Claim 13, comprising curing the layer of liquid material (50) to produce a layer of solid material on the flexible substrate (226).

15. The method of Claim 12, wherein the step of applying a layer of material (50) to the flexible substrate (226) comprises applying a layer of solid material to the flexible substrate.

## Patentansprüche

1. Vorrichtung (220) zum Aufbringen einer Materialschicht (50) auf eine Blattvorderkante (10) eines Windkraftanlagenblattes (12), wobei die Vorrichtung Folgendes umfasst:
ein flexibles Substrat (226), das in der Lage ist, die Materialschicht (50) zu tragen, und das zwischen einer Präsentationskonfiguration, in der, bei Verwendung, eine von dem flexiblen Substrat getragene Materialschicht bis zur Blattvorderkante (10) des Windkraftanlagenblatts (12) bereitgestellt werden kann, um einen anfänglichen Kontaktbereich zwischen der Materialschicht und der Blattvorderkante zu definieren, und einer Übertragungskonfiguration rekonfigurierbar ist, in der das flexible Substrat die Konturen von mindestens einem Abschnitt der Blattvorderkante annimmt; und
einen Substratträger (222), der konfiguriert ist, um das flexible Substrat (226) in den Präsentations- und Übertragungskonfigurationen zu tragen, sodass das flexible Substrat von der Präsentationskonfiguration in die Übertragungskonfiguration rekonfiguriert werden kann, indem der Kontaktbereich zwischen der Materialschicht (50) und der Blattvorderkante (10) bei einer relativen Bewegung des flexiblen Substrats und der Blattvorderkante (12) aufeinander zu erhöht wird; und
wobei der Substratträger (222) ein Widerstandselement (234) umfasst, das konfiguriert ist, um eine Widerstandskraft aufzubringen, um das flexible Substrat (226) gegen die Blattvorderkante (10) zu drücken, wenn das flexible Substrat und die Blattvorderkante aufeinander zu bewegt werden.

2. Vorrichtung nach Anspruch 1, wobei das Widerstandselement (234) in dem Substratträger (222) angeordnet ist, sodass das flexible Substrat, wenn das flexible Substrat (226) und die Blattvorderkante (10) aufeinander zu bewegt werden, gegen das Widerstandselement gedrückt wird.

3. Vorrichtung nach einem vorstehenden Anspruch, wobei zumindest ein Teil des Widerstandselements (234) elastisch verformbar und/oder elastisch komprimierbar ist.

4. Vorrichtung nach Anspruch 3, wobei der Substratträger (222) einen Freiraumbereich (238) definiert, in den das Widerstandselement (234) bei relativer Bewegung des flexiblen Substrats (226) und der Blattvorderkante (10) aufeinander zu verformt wird.

5. Vorrichtung nach einem vorstehenden Anspruch, wobei das Widerstandselement (234) eine Schicht aus verformbarem Material umfasst.

6. Vorrichtung nach einem vorstehenden Anspruch, wobei das Widerstandselement (234) ein Schaummaterial umfasst.

7. Vorrichtung nach einem vorstehenden Anspruch, weiter umfassend eine Substratverstärkung (242), die zwischen dem flexiblen Substrat (226) und dem Widerstandselement (234) angeordnet ist.

8. Verfahren zum Aufbringen einer Materialschicht (50) auf eine Blattvorderkante (10) eines Windkraftanlagenblattes (12), wobei das Verfahren Folgendes umfasst:
Bereitstellen einer Materialschicht (50) auf einem flexiblen Substrat (226),
Anordnen des flexiblen Substrats (226) in Bezug auf die Blattvorderkante (10) des Windkraftanlagenblatts (12), wobei das flexible Substrat in einer Präsentationskonfiguration konfiguriert ist, sodass ein anfänglicher Kontaktbereich zwischen der Materialschicht und der Blattvorderkante definiert ist;
Rekonfigurieren des flexiblen Substrats (226) in eine Übertragungskonfiguration, in der sich das flexible Substrat an die Konturen der Blattvorderkante (10) anpasst, indem der Kontaktbereich zwischen der Materialschicht (50) und der Blattvorderkante erhöht wird; und
Übertragen der Materialschicht (50) von dem flexiblen Substrat (226) auf die Blattvorderkante (10) des Windkraftanlagenblatts (12);
wobei der Schritt des Übertragens der Materialschicht (50) das Drücken des flexiblen Substrats (226) gegen die Blattvorderkante (10) des Windkraftanlagenblatts (12) umfasst.

9. Verfahren nach Anspruch 8, wobei das flexible Substrat (226) auf einem Substratträger (222) bereitgestellt ist, wobei der Substratträger ein Widerstandselement (234) umfasst, das konfiguriert ist, um eine Widerstandskraft aufzubringen, um das flexible Substrat gegen die Blattvorderkante (10) zu drücken, wenn das flexible Substrat und die Blattvorderkante aufeinander zu bewegt werden, und wobei das Verfahren das Bewegen des flexiblen Substrats und der Blattvorderkante aufeinander zu umfasst, um das Widerstandselement zu veranlassen, das flexible Substrat gegen die Blattvorderkante zu drücken.

10. Verfahren nach Anspruch 9, umfassend das Drücken des flexiblen Substrats (226) gegen das Widerstandselement (234) mit der Blattvorderkante (10).

11. Verfahren nach Anspruch 10, umfassend das elastische Verformen des Widerstandselements (234), um das Widerstandselement zu veranlassen, das flexible Substrat (226) gegen die Blattvorderkante (10) zu drücken.

12. Verfahren nach einem der Ansprüche 8 bis 11, wobei der Schritt des Bereitstellens eines flexiblen Substrats (226), das eine darauf aufgebrachte Materialschicht (50) aufweist, das Aufbringen einer Materialschicht auf ein flexibles Substrat umfasst.

13. Verfahren nach Anspruch 12, wobei der Schritt des Aufbringens einer Materialschicht (50) auf das flexible Substrat (226) das Aufbringen einer Schicht aus flüssigem Material auf das flexible Substrat umfasst.

14. Verfahren nach einem der Ansprüche 13, umfassend das Aushärten der Schicht aus flüssigem Material (50), um eine Schicht aus festem Material auf dem flexiblen Substrat (226) herzustellen.

15. Verfahren nach Anspruch 12, wobei der Schritt des Aufbringens einer Materialschicht (50) auf das flexible Substrat (226) das Aufbringen einer Schicht aus festem Material auf das flexible Substrat umfasst.

## Revendications

1. Appareil (220) pour l'application d'une couche de matériau (50) à un bord d'attaque (10) d'une pale d'éolienne (12), l'appareil comprenant :
un substrat flexible (226) capable de supporter la couche de matériau (50) et étant reconfigurable entre une configuration de présentation, dans laquelle en utilisation, une couche de matériau supporté par le substrat flexible peut-être ouverte jusqu'au bord d'attaque (10) de la pale d'éolienne (12) pour définir une zone initiale de contact entre la couche de matériau et le bord d'attaque, et une configuration de transfert, dans laquelle le substrat flexible adopte les contours d'au moins une portion du bord d'attaque ; et
un support de substrat (222) configuré pour supporter le substrat flexible (226) dans les configurations de présentation et de transfert de sorte que le substrat flexible puisse être reconfiguré de la configuration de présentation dans la configuration de transfert par augmentation de la zone de contact entre la couche de matériau (50) et le bord d'attaque (10) suite au mouvement relatif du substrat flexible et du bord d'attaque (12) l'un vers l'autre ; et
dans lequel le support de substrat (222) comprend un élément de résistance (234) qui est configuré pour appliquer une force de résistance pour pousser le substrat flexible (226) contre le bord d'attaque (10) lorsque le substrat flexible et le bord d'attaque sont déplacés l'un vers l'autre.

2. Appareil selon la revendication 1, dans lequel l'élément de résistance (234) est agencé dans le support de substrat (222) de sorte que lorsque le substrat flexible (226) et le bord d'attaque (10) sont déplacés l'un vers l'autre, le substrat flexible soit poussé contre l'élément de résistance.

3. Appareil selon l'une quelconque des revendications précédentes, dans lequel au moins une partie de l'élément de résistance (234) est élastiquement déformable et/ou est élastiquement compressible.

4. Appareil selon la revendication 3, dans lequel le support de substrat (222) définit une région d'espace libre (238), dans laquelle l'élément de résistance (234) est déformé lors du mouvement relatif du substrat flexible (226) et du bord d'attaque (10) l'un vers l'autre.

5. Appareil selon l'une quelconque des revendications précédentes, dans lequel l'élément de résistance (234) comprend une couche de matériau déformable.

6. Appareil selon l'une quelconque des revendications précédentes, dans lequel l'élément de résistance (234) comprend un matériau en mousse.

7. Appareil selon l'une quelconque des revendications précédentes, comprenant en outre un renforcement de substrat (242) disposé entre le substrat flexible (226) et l'élément de résistance (234).

8. Procédé d'application d'une couche de matériau (50) à un bord d'attaque (10) d'une pale d'éolienne (12), le procédé comprenant :
la fourniture d'une couche de matériau (50) sur un substrat flexible (226),
l'agencement du substrat flexible (226) en relation avec le bord d'attaque (10) de la pale d'éolienne (12) avec le substrat flexible dans une configuration de présentation de sorte qu'une zone de contact initiale soit définie entre la couche de matériau et le bord d'attaque ;
la reconfiguration du substrat flexible (226) dans une configuration de transfert, dans laquelle le substrat flexible adopte les contours du bord d'attaque (10) par augmentation de la zone de contact entre la couche de matériau (50) et le bord d'attaque ; et
le transfert de la couche de matériau (50) du substrat flexible (226) au bord d'attaque (10) de la pale d'éolienne (12) ;
dans lequel l'étape de transfert de la couche de matériau (50) comprend la poussée du substrat flexible (226) contre le bord d'attaque (10) de la pale d'éolienne (12).

9. Procédé selon la revendication 8, dans lequel le substrat flexible (226) est prévu sur un support de substrat (222), le support de substrat comprenant un élément de résistance (234) qui est configuré pour appliquer une force de résistance pour pousser le substrat flexible contre le bord d'attaque (10) lorsque le substrat flexible et le bord d'attaque sont déplacés l'un vers l'autre, et dans lequel le procédé comprend le déplacement du substrat flexible et du bord d'attaque l'un vers l'autre pour amener l'élément de résistance à pousser le substrat flexible contre le bord d'attaque.

10. Procédé selon la revendication 9, comprenant la poussée du substrat flexible (226) contre l'élément de résistance (234) avec le bord d'attaque (10).

11. Procédé selon la revendication 10, comprenant la déformation élastique de l'élément de résistance (234) pour amener l'élément de résistance à pousser le substrat flexible (226) contre le bord d'attaque (10).

12. Procédé selon l'une quelconque des revendications 8 à 11, dans lequel l'étape de fourniture d'un substrat flexible (226) ayant une couche de matériau (50) appliquée dessus comprend l'application dune couche de matériau à un substrat flexible.

13. Procédé selon la revendication 12, dans lequel l'étape d'application d'une couche de matériau (50) au substrat flexible (226) comprend l'application d'une couche de matériau liquide au substrat flexible.

14. Procédé selon la revendication 13, comprenant le durcissement de la couche de matériau liquide (50) pour produire une couche de matériau solide sur le substrat flexible (226).

15. Procédé selon la revendication 12, dans lequel l'étape d'application d'une couche de matériau (50) au substrat flexible (226) comprend l'application d'une couche de matériau solide au substrat flexible.
